Europäisches Patentamt

European Patent Office

Office européen des brevets

(19)

(11) Numéro de publication : **0 131 494**
**B1**

# (12) FASCICULE DE BREVET EUROPÉEN

(45) Date de publication du fascicule du brevet :
04.03.87

(21) Numéro de dépôt : **84401264.1**

(22) Date de dépôt : **19.06.84**

(51) Int. Cl.⁴ : **B 04 B 9/12**, B 04 B 7/00,
F 16 C 41/04

(54) Machine tournante, notamment centrifugeuse à dispositif de protection des roulements.

(30) Priorité : 05.07.83 FR 8311160

(43) Date de publication de la demande :
16.01.85 Bulletin 85/03

(45) Mention de la délivrance du brevet :
04.03.87 Bulletin 87/10

(84) Etats contractants désignés :
AT BE CH DE GB IT LI LU NL SE

(56) Documents cités :
DE-A- 1 947 043
DE-C- 464 385
FR-A- 1 141 904
US-A- 2 166 060

(73) Titulaire : GUINARD CENTRIFUGATION Société dite :
18, rue Gounod
F-92210 Saint-Cloud (FR)

(72) Inventeur : Antoine, Claude
La Celle Les Bordes
F-78 720 Dampierre (FR)
Inventeur : Zuckmeyer, Bruno
9, rue Alexandre Dumas
F-78 160 Marly-le-Roi (FR)

(74) Mandataire : Bourgognon, Jean-Marie et ai
Cabinet Flechner 22, Avenue de Friedland
F-75008 Paris (FR)

## Description

La présente invention se rapporte aux machines tournantes comprenant une partie montée tournante sur une partie fixe par un roulement ayant des corps de révolution, notamment des billes ou des rouleaux. Ces corps de révolution sont montés sur l'une des parties et roulent sur une piste montée sur l'autre partie.

On connaît de nombreuses machines de ce type, notamment des centrifugeuses, qui sont montées sur un véhicule automobile de façon à pouvoir être utilisées en des endroits différents. Les martèlements provoqués par les chocs et les vibrations pendant le transport détériorent les chemins de roulement.

Pour pallier cet inconvénient, on a déjà prévu un vérin permettant d'éloigner les corps de révolution de la piste. Pendant le transport ou même à l'arrêt quand la machine ne doit pas fonctionner, on éloigne les billes ou rouleaux de leur piste de roulement de sorte que celle-ci n'est pas endommagée. Arrivé sur le lieu où la machine tournante doit fonctionner, on remet les corps de révolution au contact de leur piste de manière à ce que la partie fixe supporte à nouveau la partie tournante par l'intermédiaire des billes.

Cette adjonction de vérins augmente beaucoup le danger d'une fausse-manœuvre pouvant avoir des conséquences très dommageables.

L'invention permet d'empêcher à coup sûr toute fausse-manœuvre du conducteur.

Il est prévu, suivant l'invention, un dispositif destiné à empêcher l'entraînement en rotation de la partie tournante tant que le vérin a éloigné les corps de révolution de la piste. Quand la machine tournante est montée sur un véhicule automobile, il est également recommandé de prévoir un deuxième dispositif destiné à empêcher la mise en route du véhicule tant que le vérin n'a pas éloigné les corps de révolution de la piste.

Grâce à cet ensemble de mesures de protection, on dispose d'une machine d'une grande fiabilité et d'une grande longévité.

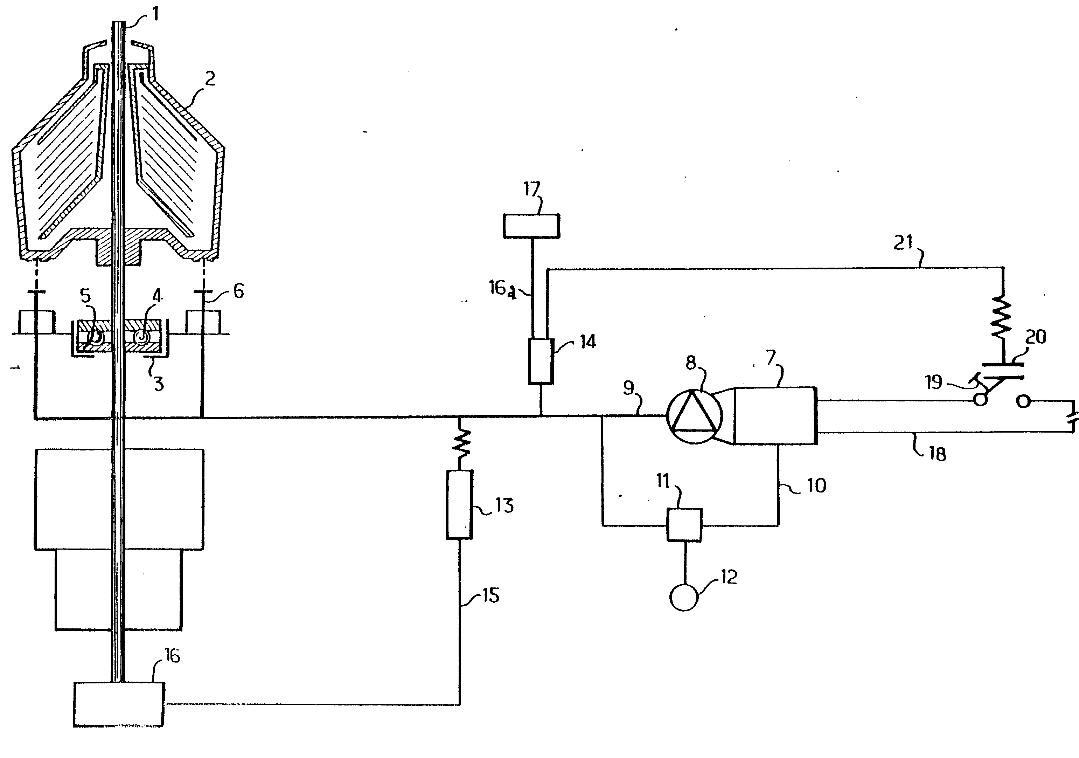

La figure unique du dessin annexé illustre l'invention.

La figure est un schéma d'une centrifugeuse montée sur un camion.

La centrifugeuse comprend un arbre 1 vertical autour duquel tourne une partie tournante 2. La partie tournante 2 est supportée par une partie fixe 3 par l'intermédiaire d'un roulement à billes 4. Les billes 4 reposent sur la partie fixe 3 et roulent sur une piste 5 solidaire de la partie fixe 3.

Des vérins 6 de levage soulèvent la partie tournante 2. Les vérins 6 pneumatiques sont alimentés depuis un réservoir 7 attenant à une pompe 8 par un circuit principal 9. Un circuit 10 dérivé, avec une vanne 11 commandée par une manette 12, court-circuite la pompe 8.

Sur le circuit principal 9 sont montés deux pressostats 13, 14. Le pressostat 13 détecte la pression qui règne dans le circuit principal 9 et, tant qu'un seuil supérieur de pression est dépassé, fournit à un circuit électrique 15 un signal électrique de mise hors tension du moteur 16 entraînant l'arbre 1. Le pressostat 14 détecte également la même pression et fournit, tant que celle-ci n'est pas inférieure à un seuil inférieur de pression, à un circuit électrique 16a, un signal qui coupe le circuit d'allumage 17 (non représenté) du camion. Celui-ci ne peut pas démarrer tant que la pression dans le circuit 9 n'est pas suffisamment basse, donc tant que les vérins 6 n'ont pas été abaissés.

La pompe 8 est branchée à l'aide d'un circuit électrique 18 ayant un interrupteur 19 manuel. L'interrupteur 19 peut être également manœuvré automatiquement par un relais interrupteur 20 monté sur un circuit de sortie 21 du pressostat 14. Dès que la pression dans le circuit 9 est inférieure à un seuil donné, le pressostat 14 ferme le circuit 18 par l'intermédiaire du circuit 21 et du relais 20. La pompe 8 entre en action et rétablit la pression. La centrifugeuse fonctionne de la manière suivante : Le camion qui la porte est arrêté ; les vérins 6 sont en position basse, car la vanne 11 est ouverte et la pompe 8 ne fonctionne pas. La centrifugeuse fonctionne normalement.

On souhaite déplacer la centrifugeuse. On ferme le circuit 18 par l'interrupteur 19 et on ferme la vanne 11 par la manette 12. La pompe 8 fonctionne et envoie du fluide dans le circuit 9. Les vérins 6 soulèvent la partie tournante 2 de la partie fixe 3. Les billes 4 ne sont plus au contact de la piste 5. Dès que la pression dans le circuit 9 a dépassé un premier seuil inférieur donné, le pressostat 13 interdit, par le circuit 15, tout fonctionnement du moteur 16.

Dès que la pression dans le circuit 9 dépasse un deuxième seuil supérieur donné, le pressostat 14 autorise, par le circuit 16, le démarrage du camion. Dès que la pression dans le circuit 9 dépasse un troisième seuil donné supérieur au deuxième, le pressostat 14 ouvre l'interrupteur 19 par l'intermédiaire du relais 20. La pompe 8 est débranchée. On met le camion en marche. On déplace ainsi la centrifugeuse d'un endroit à un autre, alors que les billes 4 ne sont pas au contact de la piste 5 et qu'il n'y a pas de danger de détériorer le roulement et alors que le moteur 16 ne peut pas fonctionner. Si la pression dans le circuit 9 redevient temporairement inférieure au troisième seuil supérieur donné, le pressostat 14 referme l'interrupteur 19 pour rétablir la pression nécessaire à l'action des vérins 6.

On arrive au nouvel endroit où la centrifugeuse doit fonctionner. On arrête le camion. On manœuvre la manette 12 pour ouvrir la vanne 11. La pompe 8 est court-circuitée. La pression dans le circuit 9 diminue. Les vérins 6 s'abaissent. La piste 5 vient au contact des billes 4. Le pressostat 13 fournit un signal électrique au moteur 16 autorisant le fonctionnement de ce dernier. On branche le moteur 16. La centrifugeuse fonctionne.

## Revendications

1. Machine tournante comprenant une partie montée tournante (2) sur une partie fixe (3) par un roulement ayant des corps de révolution (4), qui sont montés sur l'une des parties et qui roulent sur une piste (5) montée sur l'autre partie, un vérin (6) permettant d'éloigner les corps de révolution de la piste, caractérisée par un dispositif (13, 15, 16), destiné à empêcher l'entraînement en rotation de la partie tournante tant que le vérin a éloigné les corps de révolution de la piste.

2. Machine suivant la revendication 1, caractérisée en ce que le dispositif comprend un pressostat (13) qui détecte la pression qui règne dans le circuit (9) d'alimentation du vérin et qui, lorsqu'un premier seuil de pression est dépassé, envoie, par l'intermédiaire d'un circuit électrique (15) reliant la sortie du pressostat (13) au moteur (16) d'entraînement de la partie tournante (2) de la machine, un signal électrique à ce moteur (16) lui interdisant de fonctionner.

3. Machine suivant l'une des revendications 1 ou 2, à monter sur un véhicule automobile, caractérisée par un deuxième dispositif (14, 17) destiné à empêcher la mise en route du véhicule tant que le vérin n'a pas éloigné les corps de révolution de la piste.

4. Machine suivant la revendication 3, caractérisée en ce que le deuxième dispositif comprend un deuxième pressostat (14) qui détecte la pression qui règne dans le circuit (9) d'alimentation du vérin et qui, tant que la pression y est inférieure à un deuxième seuil donné, envoie, par l'intermédiaire d'un circuit électrique (16) reliant la sortie du deuxième pressostat (14) au circuit électrique d'allumage (17) du moteur du véhicule automobile, un signal électrique interdisant l'allumage de ce moteur.

5. Machine suivant l'une des revendications 1 à 4, caractérisée par un troisième dispositif (14, 20, 21) destiné à rétablir la pression dans le circuit d'alimentation (9) du vérin lorsqu'elle devient inférieure à un troisième seuil donné supérieur au deuxième seuil.

6. Machine suivant la revendication 5, caractérisée en ce que le troisième dispositif comprend le deuxième pressostat (14) qui, par un circuit électrique (21), ferme le circuit (18) de mise en route de la pompe (8) quand la pression dans les circuits d'alimentation devient inférieure au troisième seuil.

## Claims

1. A rotary machine comprising a portion (2) mounted rotatably on a fixed portion (3) by a rolling bearing having revolving members (4) which are mounted on one of the portions and which roll on a track (5) mounted on the other portion, a jack (6) permitting the revolving members to be moved away from the track, characterised by a device (13, 15, 16) intended to prevent the rotary portion from being entrained with a rotary movement while the jack has moved the revolving members away from the track.

2. A machine according to claim 1 characterised in that the device comprises a pressure sensor (13) which detects the pressure obtaining in the feed circuit (9) of the jack and which, when a first pressure threshold is exceeded, by way of an electrical circuit (15) connecting the output of the pressure sensor (13) to the motor (16) for driving the rotary portion (2) of the machine, passes an electrical signal to said motor (16) to prevent it from operating.

3. A machine according to one of claims 1 and 2, to be mounted on a motor vehicle, characterised by a second device (14, 17) intended to prevent the vehicle from being set in motion as long as the jack has not moved the revolving members away from the track.

4. A machine according to claim 3 characterised in that the second device comprises a second pressure sensor (14) which detects the pressure obtaining in the feed circuit (9) of the jack and which, as long as the pressure therein is lower than a second given threshold, passes an electrical signal preventing ignition of the engine of the motor vehicle, by way of an electrical circuit (16) connecting the output of the second pressure sensor (14) to the electrical ignition circuit (17) of the engine of the motor vehicle.

5. A machine according to one of claims 1 to 4 characterised by a third device (14, 20, 21) which is intended to re-establish the pressure in the feed circuit (9) of the jack when it falls below a third given threshold which is higher than the second threshold.

6. A machine according to claim 5 characterised in that the third device comprises the second pressure sensor (14) which, by means of an electrical circuit (21), closes the circuit (18) for setting the pump (8) in operation when the pressure in the feed circuit falls below the third threshold.

## Patentansprüche

1. Drehmaschine mit einem auf einem feststehenden Teil (3) durch eine Lagerung mit Drehkörpern (4) drehbar gelagerten Teil (2), wobei die Drehkörper auf einem der Teile angeordnet sind und in einer Führung bzw. einem Laufring am jeweils anderen Teil laufen und wobei ein Heber (6) die Möglichkeit bietet, die Drehkörper von der Führung bzw. vom Laufring abzusetzen, gekennzeichnet durch eine Vorrichtung (13, 15, 16), die einen Drehantrieb des drehbaren Teils verhindern soll, wenn durch den Heber die Drehkörper von der Führung bzw. vom Laufring abgesetzt sind.

2. Maschine nach Anspruch 1, dadurch gekennzeichnet, dass die Vorrichtung einen Druckwächter (13) umfasst, welcher den in der Leitung (9) zur Versorgung des Hebers vorherrschenden Druck erfasst und welcher bei Überschreiten einer ersten Druckschwelle über einen elektrischen Schaltkreis (15), der den Ausgang des Druckwächters (13) mit dem Motor (16) zum Antrieb des drehbaren Teils (2) der Maschine verbindet, ein elektrisches Signal an diesen Motor (16) gibt, durch welches dieser nicht in Funktion treten kann.

3. Maschine nach einem der Ansprüche 1 oder 2 zum Aufbau auf einem Kraftfahrzeug, gekennzeichnet durch eine zweite Vorrichtung (14, 17), die ein Anfahren des Fahrzeugs verhindern soll, wenn der Heber nicht die Drehkörper von der Führung bzw. vom Laufring abgesetzt hat.

4. Maschine nach Anspruch 3, dadurch gekennzeichnet, dass die zweite Vorrichtung einen zweiten Druckwächter (14) umfasst, welcher den in der Leitung (9) zur Versorgung des Hebers vorherrschenden Druck erfasst und welcher im Falle, dass der Druck unter einer zweiten vorgegebenen Schwelle liegt, über einen elektrischen Stromkreis (16), der den Ausgang des zweiten Druckwächters (14) mit dem elektrischen Zündkreis (17) des Motors des Fahrzeugs verbindet, ein elektrisches Signal überträgt, durch das ein Zünden dieses Motors verhindert wird.

5. Maschine nach irgendeinem der Ansprüche 1 bis 4, gekennzeichnet durch eine dritte Vorrichtung (14, 20, 21) zur Wiederherstellung des Drucks in der zur Versorgung des Hebers dienenden Leitung (9), wenn der Druck unter einen dritten Schwellenwert abfällt, der als oberhalb der zweiten Schwelle liegend vorgegeben ist.

6. Maschine nach Anspruch 5, dadurch gekennzeichnet, dass die dritte Vorrichtung den zweiten Druckwächter (14) umfasst, der über einen elektrischen Schaltkreis (21) den Kreis (18) zum Betrieb der Pumpe (8) schliesst, wenn der Druck in den Versorgungskreisen unter den dritten Schwellenwert abfällt.